# EUROPÄISCHE PATENTSCHRIFT

(11) **EP 2 663 039 B1**
(45) Veröffentlichungstag und Bekanntmachung des Hinweises auf die Patenterteilung: **27.06.2018**
(21) Anmeldenummer: 12166807.3
(22) Anmeldetag: 04.05.2012
(51) Int. Cl.: H04L 12/721, H04L 12/707, H04L 12/717, H04L 12/24

(54) **VERFAHREN UND VORRICHTUNG ZUR ZIELGERICHTETEN ÜBERTRAGUNG EINES DATENPAKETS**
METHOD AND DEVICE FOR TARGETED TRANSMISSION OF A DATA PACKET
PROCÉDÉ ET DISPOSITIF DESTINÉ À LA TRANSMISSION CIBLÉE D'UN PAQUET DE DONNÉES

(43) Veröffentlichungstag der Anmeldung: 13.11.2013
(73) Patentinhaber: Siemens Aktiengesellschaft, 80333 München (DE)
(72) Erfinder: Steindl, Günter, 92284 Poppenricht (DE)

(56) Entgegenhaltungen:
- WO-A1-2010/053416
- DE-A1-102007 062 739
- US-A- 5 802 316
- US-A1- 2008 175 269
- US-B1- 6 275 492
- US-B1- 6 496 503

## Beschreibung

Die Erfindung betrifft ein Datenübertragungsverfahren in einem Netzwerk zur zielgerichteten Übertragung eines Datenpakets, eine Vorrichtung zur zielgerichteten Übertragung eines Datenpakets sowie ein Computerprogrammprodukt.

Unter einer Multicast-Kommunikation oder einem Querverkehr versteht man eine Übertragung eines Datenpakets von einer Sendeeinheit zu einer Gruppe von n Empfängereinheiten (mit n ≥ 1) innerhalb eines Netzwerkes. Bei einer Multicast-Kommunikation in einem Ethernet-Netzwerk werden zur Steuerung der Datenübertragung des Datenpakets von der Sendeinheit zur Empfängereinheit in der Regel Multicast- oder Broadcast-Adressen zur Angabe einer Zieladresse der Empfängereinheit verwendet.

Die DE 10 2007 062 739 A1 offenbart ein Verfahren zur Begrenzung der Multicast-Last bei einem Ethernet-Netzwerk und ein Computerprogramm zur Implementierung des Verfahrens sowie ein Computersystem mit einem solchen Computerprogramm.

Die WO 2010/053416 A1 lehrt ein Verfahren und eine Vorrichtung zum Forwarden von Datenpaketen unter Nutzung von aggregierenden Routerschlüsseln.

Die US 6 275 492 B1 offenbart ein Verfahren und eine Vorrichtung zum Routen von Daten unter Verwendung von Routeridentifikationsinformationen.

Die US 5 802 316 A offenbart Router, welche LANs durch ein öffentliches Netzwerk verbinden.

Die US 2008/0175269 A1 lehrt eine Bandweiten basierte Selektionsmethode zum Routen von Daten.

Aus der US 64 96 503 B1 ist ein Verfahren zur Initialisierung eines Geräts in einem Netzwerk bekannt. Eine Management-Zelle enthält Initialisierungsinformationen, wie eine Adresse oder eine Weiterleitungsdatenbank.

Der Erfindung liegt die Aufgabe zugrunde, ein verbessertes Datenübertragungsverfahren zur zielgerichteten Übertragung eines Datenpakets von einer Sendeeinheit zu einer Empfängereinheit, eine verbesserte Vorrichtung zur zielgerichteten Übertragung eines Datenpakets von einer Sendeeinheit zur Empfängereinheit sowie ein verbessertes Computerprogrammprodukt zu schaffen. Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Dies kann den Vorteil haben, dass bei einer Übertragung eines Datenpakets von einer Sendeeinheit zu einer Empfängereinheit nur diejenigen Netzwerkentitäten mit Traffic belastet werden, die für den Transport des Datenpakets von der Sendeeinheit zur Empfängereinheit benötigt werden.

Durch von heutzutage verwendete Adress-Mechanismen zur Steuerung einer Datenübertragung eines Datenpakets von einer Sendeeinheit zu einer Empfängereinheit wird das jeweilige Netzwerk "geflutet", da die im Netzwerk vorhandenen Bridges oder Switches die automatischen selbstlernenden Filterbedingungen des Netzwerkstandards IEEE802.1Q für Multicast- und Broadcast-Datenpakete nicht anwenden. Dadurch, dass jede Netzwerkentität des Netzwerkes von dem jeweiligen Datenpaket "belästigt" wird, kommt es nicht nur zu einem Anstieg des Datenverkehrs in dem Netzwerk, sondern auch Empfangseinheiten von angeschlossenen Geräten werden unnötigerweise belastet. Da durch die verwendeten Multicast- oder Broadcast-Adressen eine Ausbreitung von Datenpaketen im Netzwerk nicht in Grenzen gehalten werden kann, können auch Netzsegmente, die nicht für eine Übertragung eines Datenpakets von einer Sendeeinheit zu einer Empfängereinheit dienen, mit unnötigem Datenverkehr belastet werden. Ein Anschluss einer weiteren Netzwerkentität im Netzwerk könnte durch den dadurch zusätzlich verursachten "Traffic" das ganze Netzwerksystem "zum Kippen" bringen. "Kippen" bedeutet hierbei, dass es zu einem "Stau" von Datenpaketen kommt und die Switches diese Datenpakete verwerfen, da sie sie nicht mehr speichern können.

Auch bei Vorliegen einer Ressourcen-intensiven Betriebssituation von Netzwerkentitäten innerhalb des Netzwerkes könnte durch den unnötigen Ballast von ungerichtetem Datenverkehr das ganze Netzwerksystem "kippen", d.h. ein Teil der versendeten Datenpakete wird verworfen wegen fehlender Verarbeitungskapazität. Durch die Zuführung von zusätzlichen Datenpaketen oder durch eine spontane ungeplante Verbindung von zwei Netzwerksegmenten, kann schnell eine Funktionalität einer Multicast-Kommunikation nicht mehr gegeben sein.

In dem hier beschriebenen Verfahren werden Netzwerkentitäten, die für die Übertragung des Datenpakets nicht erforderlich sind, nicht mit dem zu übertragenden Datenpaket "belästigt". Die Zielgerichtetheit der Übertragung des Datenpakets von der Sendeeinheit zur Empfängereinheit mittels eines vordefinierten Übertragungsweges führt somit zu einer Reduzierung des Datenverkehrs im gesamten Netzwerk. Freigewordene Bandbreiten können für eine Übertragung von anderen Datenpaketen benutzt werden. Es kommt nicht mehr zu einem "Fluten" des Netzwerks aufgrund ungerichteter Datenübertragungen. Die Stabilität des gesamten Netzwerkes wird erhöht, so dass auch ein Hinzufügen eines Endgerätes ohne Berücksichtigung des Gesamtkonzepts des Netzwerkes nicht so schnell zu einem "Kippen" des Gesamtsystems führt, d.h. ein Teil der versendeten Datenpakete wird wegen fehlender Übertragungskapazität nicht übertragen, sondern verworfen. Endgeräte könnten somit "out of the box" hinzugefügt werden, ohne dass es zu einem Ausfall von Netzwerksegmenten oder des gesamten Netzwerks kommen müsste. "Out of the box" bedeutet hierbei, dass ein neu angeschafftes, "soeben entpacktes" Gerät ohne eine vorherige Parametrisierung direkt an ein Netzwerk angeschlossen wird. Bei einer zu erwartenden bzw. erkannten Überlast würde nur dieses neue Gerät einen Fehler anzeigen, dass eine Verbindung nicht aufgebaut werden kann, da die zur Verfügung stehende Bandbreite nicht ausreicht. Andere Netzwerksegmente oder Netzwerkentitäten würden nicht in ihrer Funktionalität gestört werden.

Nach einer Ausführungsform der Erfindung erfolgt die Zuordnung der Erfindung zu dem Datenpaket und die Festlegung des Übertragungsweges und die Konfiguration jedes der Switches durch eine zentrale Verwaltungseinheit.

Dies kann den Vorteil haben, dass eine gleichmäßige Belastung der Netzwerksegmente und der Netzwerkentitäten erreicht werden kann. Der zentralen Verwaltungseinheit stehen z.B. aktuellen Daten zur Indikation einer aktuellen Netzwerkbelastung und der Belastung der einzelnen Switches zur Verfügung, so dass eine Festlegung des Übertragungsweges für ein bestimmtes Datenpaket und die entsprechende Konfiguration jedes der Switches, mittels derer das Datenpaket übertragen wird, zur Verfügung steht, so dass eine Festlegung des Übertragungsweges eines bestimmten Datenpakets in Abhängigkeit von einer aktuellen Belastung von Netzwerksegmenten bzw. Switches erfolgen kann. Dies ermöglicht eine Optimierung der Ausnutzung der zur Verfügung stehenden Netzwerkressourcen bei gleichmäßiger Verteilung der entstehenden Netzwerklast. Außerdem kann die zentrale Verwaltungseinheit eine Optimierung der Wegstrecke vornehmen, wodurch eine Zeitoptimierung bei der Datenübertragung eines Datenpakets von der Sendeeinheit zur Empfängereinheit erreicht werden kann.

Die zentrale Verwaltungseinheit kann den einzelnen möglichen Übertragungswegen eine Rangordnung geben und beispielsweise kurzen Übertragungswegen eine höhere Priorität geben als längeren Übertragungswegen. Schon vor dem Versenden des Datenpakets kann die zentrale Verwaltungseinheit eine Diagnose stellen, ob ein möglicher Übertragungsweg aktuell die für die Übertragung des Datenpakets erforderlichen Netzwerkressourcen zur Verfügung stellt. Sollten vordefinierte mögliche Übertragungswege aktuell beispielsweise nicht die für die Übertragung des Datenpakets erforderliche Bandbreite zur Verfügung stellen, können alternative Übertragungswege zur Übertragung des Datenpakets an eine bestimmte Empfangseinheit neu definiert und aktiviert werden.

Nach einer Ausführungsform der Erfindung ist die Kennung frei von einer physikalischen Adresse einer der Netzwerkentitäten und frei von einer Hardware-spezifischen Bezeichnung einer der Netzwerkentitäten. Alternativ kann als die Kennung z.B. eine physikalische Adresse verwendet werden, wobei in diesem Fall das "Routing" durch die Switches nicht mit dem durch diese physikalische Adresse angegebenen Ziel erfolgt, sondern wiederum anhand der Zuordnung dieser physikalischen Adresse zu einem Übertragungsweg - der Übertragungsweg muss dabei nicht an einer Entität enden, welche der besagten physikalischen Adresse entspricht.

Grundsätzlich gilt, dass für die Zuordnung eines Weges zu einem Frame der Switch ein eindeutiges Kriterium "Kennung" benötigt.
Dies kann sein:
1.) Eine definierte Ziel-MAC-Adresse, wobei diese auch anders als in der IEEE 802 definiert interpretiert werden kann.
2.) Ein Protokoll-Tag, wobei dieser auch ein VLAN-Tag sein kann.
3.) Ein definiertes "anderes" Feld im übertragenen Datenframe des Datenpakets.
4.) Ein weiterer "vorne" im Datenpaket angefügter Header.

Alternativ kann ein Datenpaket in einem anderen Datenpaket enthalten sein, wobei das Datenpaket, welches das andere Datenpaket enthält, die Kennung aufweist.

Je weiter vorne sich im Ethernet-Frame dieses "eindeutige Element" befindet, desto schneller könnte ein Switch das Paket weitergeben.

Durch die Nicht-Nutzung von beispielsweise Ethernet-MAC-Adressen oder beispielsweise von Layer 3 Multicast-/Broadcast-Adressen zum unmittelbaren Routing der Datenpakete kommt es nicht zu einem erheblichen Anstieg des Datenverkehrs zum Beispiel im Rahmen einer Multicast-Kommunikation. Verwendet man anstelle solcher physikalischen Adressen oder Hardware-spezifischen Bezeichnungen von Netzwerkentitäten stattdessen beispielsweise einen Tag, so kann die Performance bei der Übertragung eines Datenpakets von einer Sendeeinheit zu einer Empfängereinheit erheblich gesteigert werden. Eine Kennung in Form eines Tags kann in dem Datenpaket beispielsweise dadurch zugeordnet werden, dass die Kennung einer VLAN-ID innerhalb des Ethernet-Frames des Datenpakets hinzugefügt wird, wobei die VLAN-ID einem Teilnetz des Netzwerks zugeordnet ist, welches eine Schnittmenge mit dem für die Datenübertragung festgelegten Übertragungsweg aufweist. Die Erhöhung der Performance der Datenübertragung des Datenpakets von der Empfängereinheit zur Sendeeinheit könnte somit beispielsweise in einem "Cut through"-Modus gemäß dem Funktionsprinzip eines "Fast-Forwarding"-Prinzips erfolgen, wobei es auch möglich wäre, mit Index-Tabellen bei einer Festlegung des Übertragungsweges zu arbeiten.

Nach einer Ausführungsform der Erfindung umfasst die Konfiguration jeder der Switches eine Festlegung, dass das Datenpaket ausschließlich aufgrund der Kennung an die logisch nachgeordnete Netzwerkentität übermittelt wird.

Dies kann den Vorteil haben, dass lokal an einem Switch für eine Entscheidung, auf welchem weiteren Netzwerk die Segmente des Datenpakets weiter übertragen werden sollen, außer der Kennung keine weiteren Datenfelder ausgelesen werden müssen. Wird die Kennung als Index einer Tabelle verwendet, die dem jeweiligen Switch lokal zur Verfügung steht, entfällt innerhalb des Switches eine zeitaufwendige Suche einer Information bezüglich einer Weiterleitung des Datenpakets mittels oder ohne Hash-Tabellen.

Eine Latenzzeit, während der jeweilige Switch eine Entscheidung treffen muss, an welche nachgeordnete Netzwerkentität das Datenpaket weiter zu übermitteln ist, wird reduziert. Umfasst der vordefinierte Übertragungsweg des Datenpakets eine hohe Anzahl von zu passierenden Switches, so wird insgesamt die Übertragungsdauer des Datenpakets von der Sendeeinheit zur Empfängereinheit erheblich verkürzt, da die mittlere Übertragungsgeschwindigkeit erhöht wird. Außerdem unterbleibt eine Multicast-Übermittlung. Weitere Adressinformationen innerhalb des Datenpakets bleiben unberücksichtigt.

Nach einer Ausführungsform der Erfindung weist jeder der Switches Ausgangsports auf, wobei für einen Switch ein bestimmter Ausgangsport mit der diesem Switch logisch nachgeordneten Netzwerkentität mittels einer bestimmten Netzwerkverbindung verbunden ist, wobei die Netzwerkverbindung ein Teil des festgelegten Übertragungsweges ist, wobei die Konfiguration jeder der Switches für diesen Switch eine Zuordnung der Kennung zu dem bestimmten Ausgangsport dieses Switches umfasst.

Dies kann den Vorteil haben, dass einem einzelnen Switch von der zentralen Verwaltungseinheit lokal eine Zuordnungstabelle zur Verfügung gestellt werden kann, die lediglich eine Zuordnung der Kennung des weiterzuleitenden Datenpakets zu einem bestimmten Ausgangsort dieses Switches beinhaltet. Die Komplexität von zu definierenden Regeln zur Bestimmung der Weiterleitung eines bestimmten Datenpakets kann somit erheblich reduziert werden. Da eine solche Weiterleitungsregel im Wesentlichen nur noch ein Kriterium zur Entscheidung über eine Weiterleitung des von dem Switch empfangenen Datenpakets beinhaltet, kann die Latenzzeit, während derer ein bestimmtes Datenpaket einen bestimmten Switch passiert, signifikant reduziert werden. Bei einer hohen Anzahl von Switches, die Teil des für ein bestimmtes Datenpaket festgelegten Übertragungsweges sind, summiert sich die jeweilige Reduzierung der Latenzzeit pro beteiligtem Switch in einer deutlichen Verkürzung der Zustellungszeit des Datenpakets von der Sendeeinheit zur Empfängereinheit.

Nach einer Ausführungsform der Erfindung umfasst das Verfahren ferner:
- Überprüfung für einen der Switches, ob dessen bestimmte Netzwerkverbindung aktuell eine für die Übertragung des Datenpakets zu der diesem Switch logisch nachgeordneten Netzwerkentität ausreichende Bandbreite zur Verfügung stellt,
- im Falle, dass die Überprüfung, dass die aktuell zur Verfügung stehende Bandbreite unzureichend für die Übermittlung des Datenpakets ist, Festlegung eines neuen Übertragungsweges des Datenpakets, wobei der neue Übertragungsweg den Übertragungsweg beschreibt, wie das Datenpaket von der Sendeeinheit zur Empfängereinheit über zumindest einige der Switches transportiert werden soll und eine erneute Konfiguration jeder der Switches des Übertragungsweges, an welche logisch nachgeordnete Netzwerkentität dieser Switch das Datenpaket mit der Kennung zu übermitteln hat.

Dies kann den Vorteil haben, dass durch eine vorherige Überprüfung durch die zentrale Verwaltungseinheit und/oder dem jeweiligen Switch selbst der zur Verfügung stehenden Bandbreite sichergestellt wird, dass ein bestimmtes Datenpaket, welches von einer Sendeeinheit initiiert wurde, auch tatsächlich in gewünschter Weise die Empfängereinheit erreicht. Eine eventuelle Fehlermeldung an einem der Switches des Übertragungsweges, dass wegen mangelnder zur Verfügung stehender Bandbreite im nachfolgenden Netzwerksegment, das Datenpaket nicht oder nicht ohne zeitliche Verzögerung weitergeleitet werden kann, bleibt somit aus.

Nach einer Ausführungsform der Erfindung wird die Überprüfung der Switches durch die zentrale Verwaltungseinheit durchgeführt.

Dadurch, dass die zentrale Verwaltungseinheit z.B. vor einem Versenden des Datenpakets durch die Sendeeinheit einen präventiven Check durchführt, ob alle an einem vordefinierten Übertragungsweg beteiligten Netzwerksegmente die für die Übertragung des Datenpakets notwendige Bandbreite zur Verfügung stellen, wird jegliches Trial-Error-Prinzip bei einer Übertragung eines Datenpakets von einer Sendeeinheit zu einer Empfängereinheit eliminiert.

Sollte ein Netzwerksegment, welches Teil des vorher festgelegten Übertragungsweges eines bestimmten Datenpaketes ist, eine zu geringe zur Verfügung stehende Bandbreite aufweisen, was von der zentralen Verwaltungseinheit präventiv ermittelt werden kann, so ermittelt diese zentrale Verwaltungseinheit eine neue Übertragungsroute innerhalb des Netzwerkes, bei der alle beteiligten Netzwerksegmente die für die Übertragung des Datenpakets erforderliche Bandbreite zur Verfügung stellen. Die Effizienz einer Übertragung eines Datenpaketes von einer Sendeeinheit zu einer Empfängereinheit wird dadurch wesentlich erhöht.

Eine Sendereinheit sendet ein Datenpaket an alle Empfängereinheiten, die eine Kommunikationsbeziehung zu dieser Sendeeinheit haben, auf einem jeweils vordefinierten Übertragungsweg. Dabei wird das Datenpaket an jeder "Gabelung" des Übertragungsweges, d.h. an jedem Switch, der Teil des jeweiligen Übertragungsweges ist, verdoppelt und erreicht dadurch alle Empfängereinheiten, die eine Kommunikationsbeziehung zur Sendeeinheit haben.

Wird die Übertragung des Datenpakets, z.B. aufgrund eines Fehlers, einer Verbindungsunterbrechung oder aufgrund einer anderen Ursache entlang eines vordefinierten Übertragungsweges vor Erreichen der jeweiligen Empfangseinheit abgebrochen, dann wird das Datenpaket von einem der Switches verworfen ("discarded").

Gleichzeitig legt die zentrale Verwaltungseinheit die verschiedenen Übertragungswege vorher so fest, dass die zur Verfügung stehenden Netzwerkressourcen im gesamten Netzwerksystem gleichmäßig ausgelastet werden.

Nach einer Ausführungsform der Erfindung wird bei Festlegung des neuen Übertragungsweges die Kennung des Datenpakets geändert.

Dies kann den Vorteil haben, dass, wenn für die Übertragung eines Datenpakets von einer Sendeeinheit zu einer bestimmten Empfängereinheit mehrere Übertragungswege festgelegt worden sind, diese als mögliche Übertragungswege innerhalb eines Speichersystems der zentralen Verwaltungseinheit abgespeichert werden können. Alle vorher festgelegten Übertragungswege für ein Übertragen des Datenpakets von einer Sendeeinheit zu einer Empfängereinheit können somit als inaktive Netzwerkrouten abgespeichert werden. Bei Bedarf, insbesondere nach vorheriger Überprüfung, ob alle Netzwerksegmente, die an dem jeweiligen Übertragungsweg beteiligt sind, die für die Übertragung des Datenpakets notwendige Bandbreite aufweisen, können "inaktive" Übertragungswege wieder zu "aktiven" Übertragungswege gemacht werden. Der Prozess der Administration durch die zentrale Verwaltungseinheit kann somit wesentlich beschleunigt werden.

Durch die Nutzung einer neuen Kennung für einen neuen Übertragungsweg ist an jedem individuellen Switch, der an diesem neuen Übertragungsweg beteiligt ist, eine eindeutige Zuordnung vorgegeben, wie das von dem jeweiligen Switch empfangene Datenpaket bezüglich der Weiterleitung zu handeln ist, da z.B. eine eindeutige Zuordnung zwischen der Kennung und einem bestimmten Ausgangsport des jeweiligen Switches gegeben ist.

Nach einer Ausführungsform der Erfindung umfasst der Übertragungsweg mehrere Wege, über die parallel das Datenpaket von der Sendeeinheit zur Empfängereinheit über zumindest einige der Switches transportiert werden soll.

Dies kann den Vorteil haben, dass zum Beispiel bei einer erheblichen Größe des Datenpakets dieses Datenpaket aufgespalten werden kann, so dass die einzelnen Teile des Datenpakets über die verschiedenen Übertragungswege von der Sendeeinheit zur Empfängereinheit übermittelt werden können. Dabei wird keines der zur Verfügung stehenden Netzwerksegmente überbelastet. Durch die vorherige Überprüfung, ob die jeweils zur Verfügung stehende Bandbreite für einen Transport der einzelnen Teile des Datenpakets zur Verfügung steht, kann sichergestellt werden, dass das Datenpaket auch tatsächlich bei der Empfängereinheit eintrifft.

Ein weiterer Vorteil, ist die Möglichkeit, eine stoßfreie Medienredundanz zu realisieren. D.h. eine Übertragung eines Datenpakets an eine bestimmte Empfangseinheit ist über mehrere Übertragungswege möglich. Sollte ein möglicher Übertragungsweg bei mindestens einer der Netzwerkverbindungen zwischen zwei benachbarten Switches nicht die für die Übertragung erforderliche Übertragungskapazität aufweisen, so kann dieses Datenpaket über einen anderen alternativen Übertragungsweg an die bestimmte Empfangseinheit übermittelt werden.

Nach einer Ausführungsform der Erfindung handelt es sich bei dem Datenpaket um ein Multicast-Datenpaket für Multicast-Empfänger, wobei die Empfängereinheit einer der Multicast-Empfänger ist. In diesem Fall enthält z.B. das Ziel-MAC-Feld des Datenpakets eine Multicast- oder Broadcast-Adresse.

Dadurch, dass für jeden Multicast-Empfänger jeweils ein bestimmter empfängerspezifischer Übertragungsweg vordefiniert wurde, können die einzelnen Übertragungswege so optimiert werden, dass bei Nutzung ein und desselben Netzwerkverbindung das Datenpaket nur einmal in dieser Netzwerkverbindung übermittelt zu werden braucht und dass in den anderen Netzwerkverbindungen der anderen Übertragungswege eine zielgerichtete Übertragung des Datenpakets möglich wird. Dabei ist hier unter einem Multicast-Datenpaket ein Datenpaket zu verstehen, das von einer Sendeeinheit an mehrere Empfangseinheiten gleichzeitig übertragen werden kann.

Bei einer "one-to-many"-Kommunikation kommt es somit nicht mehr zu einem "Fluten" des fremden Netzwerks durch Trial-and-Error-Übertragungsversuche und potentielle Kollisionen von Datenpaketen. Die Wahrscheinlichkeit, dass das gesamte Netzwerk bei einer "one-to-many"-Kommunikation zu einem Gesamtausfall des Netzwerks aufgrund zu hohem und unkontrolliertem Datenverkehr kommt, wird bei Anwendung des hier beschriebenen Verfahrens somit erheblich reduziert.

Somit ist es möglich, Multicast-Kommunikationen zwischen einer Sendeeinheit und mehreren Empfängereinheiten, wie z.B. Publisher-Subscriber-Kommunikationen mit einem Publisher als Sendeeinheit und mehreren Empfängereinheiten als Subscribern, auch in der Automatisierungstechnik ohne komplexe Regeln nutzbar zu machen. Da bei der Festbelegung der einzelnen Übertragungswege auch eine Überprüfung der jeweils zur Verfügung stehenden Bandbreite erfolgt, kann die Funktionsfähigkeit des gesamten Netzwerks sichergestellt werden. Zum Beispiel kann für die Multicast-Kommunikation zwischen einem Publisher und mehreren Subscribern 50% der Netzwerkressourcen reserviert werden, so dass auch Geräte "out of the box" dem Netzwerk hinzugefügt werden können, ohne dass es zu einem Ausfall des gesamten Netzwerks kommen könnte.

In einem weiteren Aspekt betrifft die Erfindung ein Computerprogrammprodukt mit von einem Prozessor ausführbaren Instruktionen zur Durchführung des obig beschriebenen Verfahrens gemäß Anspruch 13. In einem weiteren Aspekt betrifft die Erfindung eine Vorrichtung zur Steuerung einer Datenübertragung in einem Netzwerk mit den im Anspruch 14 angegebenen Merkmalen.

Im Folgenden werden bevorzugte Ausführungsformen der Erfindung anhand der folgenden Zeichnung näher erläutert.
- FIG 1: ein Flussdiagramm zur Veranschaulichung der Verfahrensschritte für eine zielgerichtete Übertragung eines Datenpakets,
- FIG 2: ein Blockdiagramm mit beteiligten Netzwerkentitäten und einer zentralen Verwaltungseinheit zur Realisation des Datenübertragungsverfahrens und
- FIG 3: ein Schaltdiagramm eines Switches.

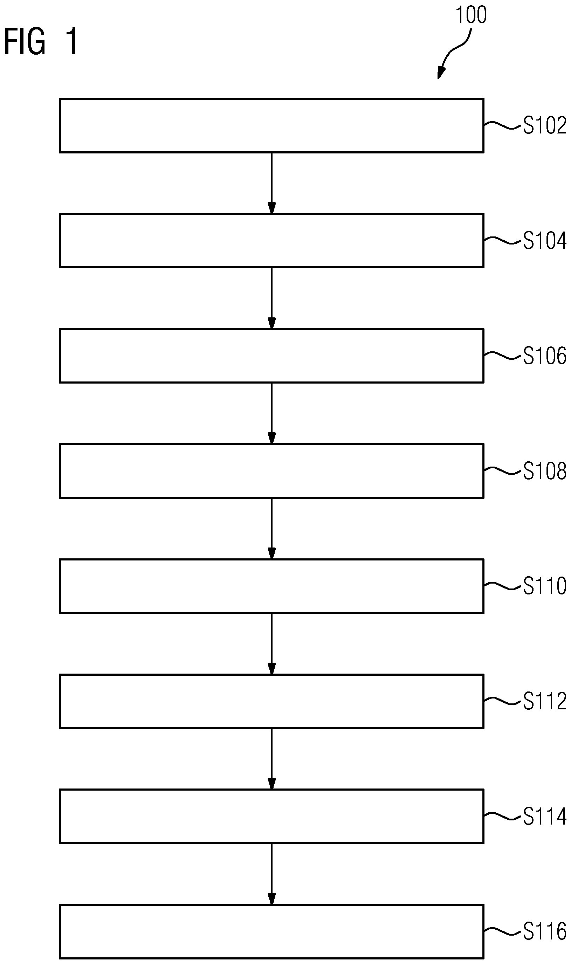

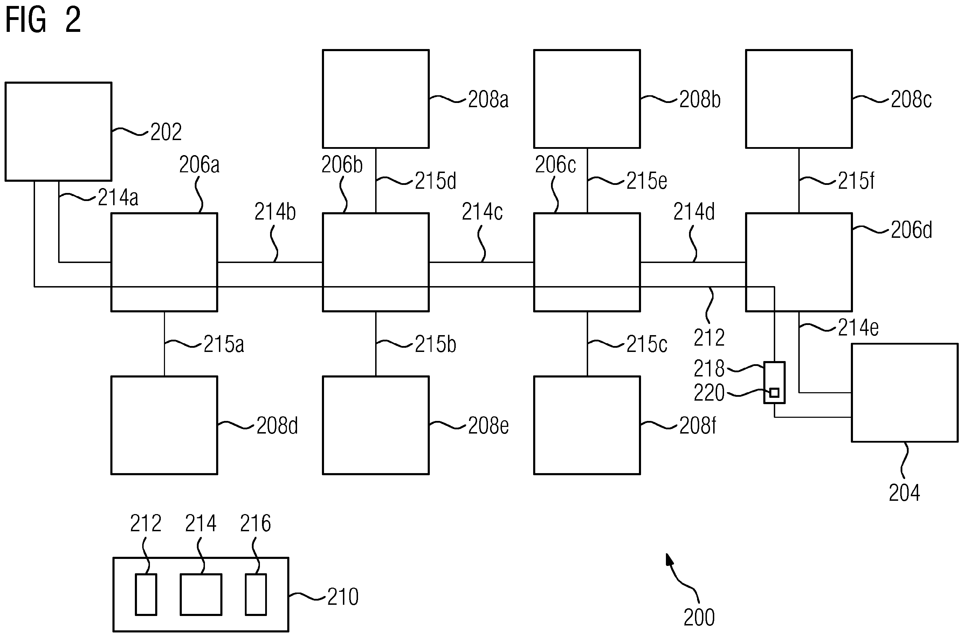

Die FIG 1 zeigt ein Flussdiagramm 100 zur Veranschaulichung der Verfahrensschritte, welche verwendet werden können, um ein Datenpaket von einer Sendeeinheit 218 von einer Sendeeinheit 202 zu einer Empfängereinheit 204 zu übertragen (siehe FIG 2).

In Schritt S102 erfolgt durch eine Verwaltungseinheit 210 (siehe FIG 2) eine Überprüfung der aktuell zur Verfügung stehenden Bandbreite sämtlicher einzelner Netzwerkverbindungen zwischen zwei jeweils einander benachbarten Netzwerkentitäten innerhalb des Netzwerkes und/oder von vorher festgelegten Übertragungswegen. In Schritt S104 erfolgt eine Festlegung eines Übertragungsweges eines Datenpaketes 218 von einer Sendeeinheit 202 zu einer bestimmten Empfängereinheit 204. Dabei beschreibt der Übertragungsweg 212 des Datenpakets 218 den Übertragungsweg, wie das Datenpaket 218 von der Sendeeinheit 202 zur Empfängereinheit 204 über einige der Switches 206a, 206b, 206c, 206d transportiert werden soll, wobei der Übertragungsweg 212 eine Reihenfolge der Switches 206a, 206b, 206c, 206d angibt, über welche nacheinander das Datenpaket 218 an die Empfängereinheit 204 übermittelt werden soll.

In Schritt S106 erfolgt eine Zuordnung einer Kennung 220 zu dem Datenpaket 218, welches von der Sendeeinheit 202 zu der Empfängereinheit 204 transportiert werden soll.

In Schritt S108 erfolgt eine Konfiguration jeder der Switches 206a, 206b, 206c, 206d des Übertragungsweges 212, an welche logisch nachgeordnete Netzwerkentität dieser jeweilige Switch das Datenpaket 218 mit der Kennung 220 zu übermitteln hat. Dabei erfolgt die Konfiguration jedes der Switches durch die zentrale Verwaltungseinheit 210.

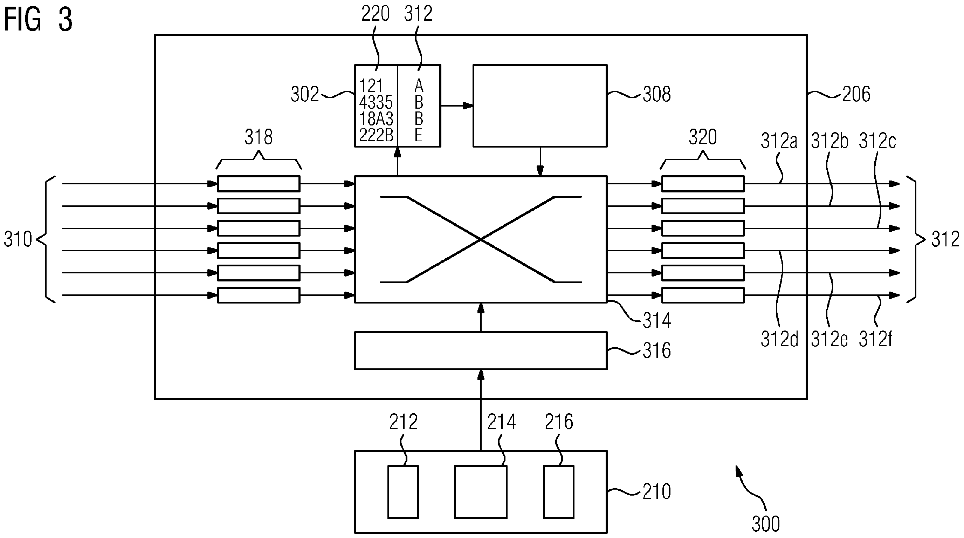

In Schritt S110 erfolgt eine lokale Zurverfügungstellung einer Zuordnungstabelle für jeden der Switches 206a, 206b, 206c und 206d, welche beispielsweise eine Zuordnung einer bestimmten Kennung 220 zu einem jeweils bestimmten Ausgangsport 312 (siehe Figur 3) aufweist. Jeder einzelne Switch 206a, 206b, 206c und 206d des festgelegten Übertragungsweges 212 leitet nun ein bestimmtes empfangenes Datenpaket 218, welches die Kennung 220 beinhaltet, im Einklang mit der von der zentralen Verwaltungseinheit 210 lokal zur Verfügung gestellten Zuordnungstabelle 302 gelieferten Information über die Zuordnung der Kennung 220 zu einem bestimmten Port 312 an dem einen vordefinierten Port 312, welcher mit der diesem Switch logisch nachgeordneten Netzwerkentität verbunden ist.

Erst nach einer lokalen Zurverfügungstellung der Zuordnungstabelle 302 für jeden einzelnen der am Übertragungsweg 212 beteiligten Switches 206a, 206b, 206c, 206d erfolgt die eigentliche Sendung des Datenpakets 218 mit der Kennung 220 von der Sendeeinheit 202 an die Empfängereinheit in Schritt S112. In Schritt S114 erfolgt der eigentliche Transport des Datenpakets 218 mit der Kennung 220 entlang des von der Verwaltungseinheit 210 zuvor festgelegten Übertragungsweges 212 über die Switches 206a, 206b, 206c und 206d. In Schritt S116 wird das Datenpaket 218 mit der Kennung 220 von der Empfängereinheit 204 empfangen.

Sollte einem Switch keine solche Zuordnungstabelle lokal zur Verfügung gestellt werden, so wird ein in dem jeweiligen Switch eingetroffenes Datenpaket verworfen, um das Netzwerk nicht zu "fluten".

Die FIG 2 zeigt ein Blockdiagramm von den an der Realisierung einer zielgerichteten Übertragung des Datenpakets 218 der Kennung 220 beteiligten Netzwerkentitäten, welche von der zentralen Verwaltungseinheit 210 in ihrer Funktionalität gesteuert werden.

Die Sendeeinheit 202 übermittelt über den festgelegten Übertragungsweg 212 das Datenpaket 218 mit der Kennung 220 an die Empfängereinheit 204. Wie aus der Figur 2 ersichtlich, ist der Übertragungsweg 212 von der Sendeeinheit 202 bis zur Empfängereinheit 204 zielgerichtet und erfolgt nur über die Switches 206a, 206b, 206c und 206d sowie die dazwischen liegenden Netzwerkverbindungen 214a, 214b, 214c, 214d und 214e, welche zuvor von der zentralen Verwaltungseinheit 210 als Teilkomponenten des festgelegten Übertragungsweges 212 festgelegt wurden. Wie aus Figur 2 ersichtlich, erfolgt keinerlei "Belästigung" von Netzwerkentitäten 208a, 208b, 208c, 208d, 208e, 208f, welche vorher nicht von der zentralen Verwaltungseinheit 210 als an dem definierten Übertragungsweg 212 nicht beteiligten Netzwerkentitäten festgelegt wurden. Es erfolgt somit kein "Fluten" des gesamten Netzwerkes, zum Beispiel im Falle einer Multicast-Kommunikation, wobei ein Publisher, welcher der Sendeeinheit 202 entspräche, ein Datenpaket 218 an einen Multicast-Empfänger, welcher der Empfängereinheit 204 entspräche, sendet. Auch bei einem Versenden des Multicast-Datenpakets an mehrere Multicast-Empfänger, z.B. an die Netzwerkentitäten 208a, 208f, 204 in Figur 2, erfolgt das Versenden des Datenpakets zielgerichtet an jeden der mehreren Multicast-Empfänger, so dass es auch in diesem Fall nicht zu einem "Fluten" des gesamten Netzwerkes kommt.

Für die Übertragung des Datenpakets 218 von der Sendeeinheit 202 zur Empfängereinheit 204 werden nur diejenigen Switches 206a, 206b, 206c, 206d sowie die Netzwerkverbindungen 214a, 214b, 214c, 214d, 214e, zwischen den Switches bzw. zwischen der Sendeeinheit 202 und der Empfängereinheit 204. Die zentrale Verwaltungseinheit 210 weist einen Speicher 212, ein Modul 214 zur Festlegung eines Übertragungsweges, zur Konfiguration der Switches, sowie zur Zuordnung einer Kennung 220 zu einem Datenpaket 218 sowie einen Prozessor 216 auf. In dem Speicher 212 können die festgelegten Übertragungswege 212 als aktive bzw. inaktive Übertragungswege 212 abgespeichert werden. Bei Bedarf und bei aktueller Verfügbarkeit von für einen Übertragungsweg 212 erforderlichen Netzwerkressourcen kann so auf inaktive Übertragungswege zurückgegriffen werden und diese wieder für eine Übertragung eines Datenpaketes 218 aktiviert werden.

FIG 3 zeigt eine schematische Darstellung 300 eines Switches 206 mit Eingangsports 310, Ausgangsports 312, Input Buffers 318, Output Buffers 320 und einer Switch Matrix 314 zur Herstellung einer Verbindung zwischen den Eingangsports 310 und den Ausgangsports 312. Konfiguriert wird der Switch 206 von einer zentralen Verwaltungseinheit 210 über ein Interface 316. Dem Switch 206 wird eine lokale Zuordnungstabelle 302 zur Verfügung gestellt, welche eine Information über eine Zuordnung zwischen der Kennung 220 eines Datenpakets 218 und einem Port 312 des jeweiligen Switches aufweist. Die in der Zuordnungstabelle 302 geschriebene Zuordnung zwischen der Kennung 220 eines Datenpakets 218 und einem Ausgangsport 312 des Switches 206 ist Grundlage für eine Switch-Steuerungs-Software 308, welche wiederum die Switch Matrix 214 steuert.

Bei der Übertragung eines Datenpakets 218 der Kennung 220 von einer Sendeeinheit 202 zu einer Empfängereinheit 204 werden die von der zentralen Verwaltungseinheit 210 festgelegten Switches 206 des festgelegten Übertragungsweges 212 von dem Datenpaket 218 mit der Kennung 220 passiert. Das Datenpaket trifft über einen der Eingangsports 310 des Switches 206 in dem Switch 206 über die Input Buffers 318 ein. Die Kennung 220 des Datenpakets 218 wird von dem Switch 206 ausgelesen.

Die Kennung 220 wird innerhalb der Zuordnungstabelle 302 in der Spalte für die Kennung 220 identifiziert und die in der Zuordnungstabelle 302 vorgeschriebene Zuordnung zu einem der Ports 312 des Switches 206 ausgelesen. Die Switch-Steuerungs-Software 308 sendet diese Information an die Switch Matrix 314. Die Switch Matrix 314 stellt dann eine Verbindung her zwischen dem Eingangsport 310, über welchen das Datenpaket 218 den Switch 206 betreten hat, und dem einen Ausgangsport 312, welcher in der Zuordnungstabelle 302 der Kennung 220 zugeordnet wurde. Das Datenpaket 218 mit der Kennung 220 wird dann von dem Eingangsport 310 zu dem von der zentralen Verwaltungseinheit 210 zuvor festgelegten Ausgangsport 312, beispielsweise Ausgangsport 312 c, in der Switch Matrix 314 innerhalb des Switches 206 übermittelt. Das Datenpaket 218 mit der Kennung 220 verlässt dann beispielsweise über den Ausgangsport 312c den Switch 206 und wird somit an die diesem Switch 206 logisch nachgeordnete Netzwerkentität weitergeleitet wie es dem zuvor festgelegten Übertragungsweg 212 entspricht. Dieser Vorgang wiederholt sich von Switch zu Switch, so dass das Datenpaket 218 mit der Kennung 220 zielgerichtet die Empfängereinheit 204 erreicht.

## Patentansprüche

1. Computer-implementiertes Datenübertragungsverfahren für eine zentrale Verwaltungseinheit (210) in einem Netzwerk, wobei das Netzwerk eine Sendeeinheit (202) und Netzwerkentitäten (206a, 206b, 206c, 206d, 208a, 208b, 208c, 208d, 208e, 208f) aufweist, wobei die Netzwerkentitäten eine Empfängereinheit (204) und mehrere Switches (206a, 206b, 206c, 206d) umfassen, wobei das Verfahren einer zielgerichteten Übertragung eines Datenpakets (218) von der Sendeeinheit (202) zur Empfängereinheit (204) dient, wobei die Sendeeinheit (202) und die Empfängereinheit (204) über zumindest einige der Switches (206a, 206b, 206c, 206d) verbunden sind, wobei das Verfahren folgende Schritte umfasst:
- Zuordnung einer Kennung (220) (S106) zu einem Datenpaket (218), welches von der Sendeeinheit (202) zu der Empfängereinheit (204) transportiert werden soll,
- Festlegung eines Übertragungsweges (212) (S104) des Datenpakets (218) mit dieser Kennung (220), wobei der Übertragungsweg (212) den Übertragungsweg (212) beschreibt, wie das Datenpaket (218) von der Sendeeinheit (202) zur Empfängereinheit (204) über zumindest einige der Switches (206a, 206b, 206c, 206d) transportiert werden soll, wobei der Übertragungsweg (212) eine Reihenfolge der Switches (206a, 206b, 206c, 206d) angibt, über welche nacheinander das Datenpaket (218) an die Empfängereinheit (204) übermittelt werden soll, wobei sich aus der Reihenfolge für jede Netzwerkentität eine dieser Netzwerkentität logisch nachgeordnete Netzwerkentität ergibt, an welche das Datenpaket (218) übermittelt werden soll,
- Konfiguration jeder der Switches (206a, 206b, 206c, 206d) des Übertragungswegs (212), an welche logisch nachgeordnete Netzwerkentität dieser Switch das Datenpaket (218) mit der Kennung (220) zu übermitteln hat (S108),
wobei die Zuordnung der Kennung (220) zu dem Datenpaket (218) und die Festlegung des Übertragungsweges (212) und die Konfiguration jedes der Switches (206a, 206b, 206c, 206d) durch eine zentrale Verwaltungseinheit (210) erfolgt,
**dadurch gekennzeichnet,**
**dass** der Übertragungsweg (212) mehrere Wege umfasst, über die parallel das Datenpaket (218) von der Sendeeinheit (202) zur Empfängereinheit (204) über zumindest einige der Switches transportiert werden soll, wobei die zentrale Verwaltungseinheit (210) die verschiedenen Übertragungswege (212) vorher so festlegt, dass die zur Verfügung stehenden Netzwerkressourcen im gesamten Netzwerksystem gleichmäßig ausgelastet werden, wobei die zentrale Verwaltungseinheit (210) schon vor dem Versenden des Datenpakets eine Diagnose stellt, ob ein möglicher Übertragungsweg aktuell die für die Übertragung des Datenpakets erforderlichen Netzwerkressourcen zur Verfügung stellt, und wobei ein Datenpaket (218) aufgespalten wird, so dass die einzelnen Teile des Datenpakets (218) über die verschiedenen Übertragungswege (212) von der Sendeeinheit (202) zur Empfängereinheit (204) übermittelt werden.

2. Verfahren nach Anspruch 1, wobei die zentrale Verwaltungseinheit (210) kurzen Übertragungswegen eine höhere Priorität gibt als längeren Übertragungswegen.

3. Verfahren nach einem der Ansprüche 1 oder 2, wobei in dem Fall, dass vordefinierte mögliche Übertragungswege (212) aktuell nicht die für die Übertragung des Datenpakets erforderliche Bandbreite zur Verfügung stellen, alternative Übertragungswege (212) zur Übertragung des Datenpakets an eine bestimmte Empfangseinheit neu definiert und aktiviert werden.

4. Verfahren nach einem der vorhergehenden Ansprüche, wobei das Verfahren zur Multicast-Kommunikationen zwischen einer Sendeeinheit (202) und mehreren Empfängereinheiten (204) in der Automatisierungstechnik vorgesehen ist.

5. Verfahren nach einem der vorigen Ansprüche, wobei die Kennung (220)frei von einer physikalischen Adresse einer der Netzwerkentitäten (206a, 206b, 206c, 206d, 204) und frei von einer Hardware spezifischen Bezeichnung einer der Netzwerkentitäten (206a, 206b, 206c, 206d, 204) ist.

6. Verfahren nach einem der vorigen Ansprüche, wobei die Konfiguration jeder der Switches (206a, 206b, 206c, 206d, 204) eine Festlegung umfasst, dass das Datenpaket (218) ausschließlich aufgrund der Kennung (220) an die logisch nachgeordnete Netzwerkentität übermittelt wird.

7. Verfahren nach einem der vorigen Ansprüche, wobei jeder der Switches (206a, 206b, 206c, 206d, 204) Ausgangsports (312, 312a, 312b, 312c, 312d, 312e, 312f) aufweist, wobei für einen Switch ein bestimmter Ausgangsport mit der diesem Switch logisch nachgeordneten Netzwerkentität mittels einer bestimmten Netzwerkverbindung verbunden ist, wobei die Netzwerkverbindung ein Teil des festgelegten Übertragungsweges (212) ist, wobei die Konfiguration jeder der Switches (206a, 206b, 206c, 206d, 204) für diesen Switch eine Zuordnung der Kennung (220) zu dem bestimmten Ausgangsport dieses Switches umfasst.

8. Verfahren nach Anspruch 7, ferner umfassend:
- Überprüfung für einen der Switches (206a, 206b, 206c, 206d), ob dessen bestimmte Netzwerkverbindung (214a, 214b, 214c, 214d, 214e) aktuell eine für die Übertragung des Datenpakets (218) zu der diesem Switch logisch nachgeordneten Netzwerkentität ausreichende Bandbreite zur Verfügung stellt (S102),
- im Falle, dass die Überprüfung ergibt, dass die aktuell zur Verfügung stehende Bandbreite unzureichend für die Übermittlung des Datenpakets (218) ist, Festlegung eines neuen Übertragungsweges (212) des Datenpakets (218) (S102), wobei der neue Übertragungsweg (212) den Übertragungsweg (212) beschreibt, wie das Datenpaket (218) von der Sendeeinheit (202) zur Empfängereinheit (204) über zumindest einige der Switches transportiert werden soll und erneute Konfiguration jeder der Switches des Übertragungswegs (212), an welche logisch nachgeordnete Netzwerkentität dieser Switch das Datenpaket (218) mit der Kennung (220) zu übermitteln hat.

9. Verfahren nach einem der vorhergehenden Ansprüche, wobei die Überprüfung der Switches (206a, 206b, 206c, 206d) durch die zentrale Verwaltungseinheit (210) durchgeführt wird.

10. Verfahren nach einem der vorhergehenden Ansprüche , wobei bei Festlegung des neuen Übertragungswegs (212) die Kennung (220) des Datenpakets (218) geändert wird.

11. Verfahren nach einem der vorhergehenden Ansprüche, wobei es sich bei dem Datenpaket (218) um ein Multicast-Datenpaket für Multicast-Empfänger handelt, wobei die Empfängereinheit (204) einer der Multicast-Empfänger ist.

12. Computerprogrammprodukt mit von einem Prozessor ausführbaren Instruktionen zur Durchführung der Verfahrensschritte gemäß einem der vorigen Ansprüche.

13. Vorrichtung ausgebildet als zentrale Verwaltungseinheit (210) zur Steuerung einer Datenübertragung innerhalb eines Netzwerkes, wobei das Netzwerk eine Sendeeinheit (202) und Netzwerkentitäten (206a, 206b, 206c, 206d, 208a, 208b, 208c, 208d, 208e, 208f) aufweist, wobei die Netzwerkentitäten eine Empfängereinheit (204) und mehrere Switches (206a, 206b, 206c, 206d) umfassen, wobei die Datenübertragung einer zielgerichteten Übertragung eines Datenpakets (218) von der Sendeeinheit (202) zur Empfängereinheit (204) dient, wobei die Sendeeinheit (202) und die Empfängereinheit (204) über zumindest einige der Switches (206a, 206b, 206c, 206d) verbunden sind, wobei die Vorrichtung dazu ausgebildet ist, folgende Schritte auszuführen:
- Zuordnung einer Kennung (220) zu einem Datenpaket (218), welches von der Sendeeinheit (202) zu der Empfängereinheit (204) transportiert werden soll,
- Festlegung eines Übertragungsweges (212) des Datenpakets (218) mit dieser Kennung (220), wobei der Übertragungsweg (212) den Übertragungsweg (212) beschreibt, wie das Datenpaket (218) von der Sendeeinheit (202) zur Empfängereinheit (204) über zumindest einige der Switches transportiert werden soll, wobei der Übertragungsweg (212) eine Reihenfolge der Switches angibt, über welche nacheinander das Datenpaket (218) an die Empfängereinheit (204) übermittelt werden soll, wobei sich aus der Reihenfolge für jede Netzwerkentität eine dieser Netzwerkentität logisch nachgeordnete Netzwerkentität ergibt, an welche das Datenpaket (218) übermittelt werden soll,
- Konfiguration jeder der Switches des Übertragungswegs (212), an welche logisch nachgeordnete Netzwerkentität dieser Switch das Datenpaket (218) mit der Kennung (220) zu übermitteln hat,
- Zuordnung der Kennung (220) zu dem Datenpaket (218) und Festlegung des Übertragungsweges (212) und die Konfiguration jedes der Switches (206a, 206b, 206c, 206d) **dadurch gekennzeichnet, dass** der Übertragungsweg (212) mehrere Wege umfasst, über die parallel das Datenpaket (218) von der Sendeeinheit (202) zur Empfängereinheit (204) über zumindest einige der Switches transportiert werden soll, wobei die zentrale Verwaltungseinheit (210) weiter dazu ausgebildet ist, die verschiedenen Übertragungswege (212) vorher so fest zu legen, dass die zur Verfügung stehenden Netzwerkressourcen im gesamten Netzwerksystem gleichmäßig ausgelastet werden, wobei die zentrale Verwaltungseinheit (210) weiter dazu ausgebildet ist, schon vor dem Versenden des Datenpakets eine Diagnose zu stellen, ob ein möglicher Übertragungsweg aktuell die für die Übertragung des Datenpakets erforderlichen Netzwerkressourcen zur Verfügung stellt, und ein Datenpaket (218) auf zu spalten, so dass die einzelnen Teile des Datenpakets (218) über die verschiedenen Übertragungswege (212) von der Sendeeinheit (202) zur Empfängereinheit (204) übermittelt werden.

14. Vorrichtung nach Anspruch 13, wobei die Vorrichtung zur Steuerung einer Datenübertragung in einem Netzwerk zur Multicast-Kommunikationen zwischen einer Sendeeinheit (202) und mehreren Empfängereinheiten (204) in der Automatisierungstechnik vorgesehen ist.

## Claims

1. Computer-implemented data transmission method for a central administration unit (210) in a network, wherein the network has a transmit unit (202) and network entities (206a, 206b, 206c, 206d, 208a, 208b, 208c, 208d, 208e, 208f), wherein the network entities comprise a receiver unit (204) and a number of switches (206a, 206b, 206c, 206d), wherein the method is used for a targeted transmission of a data packet (218) from the transmit unit (202) to the receiver unit (204), wherein the transmit unit (202) and the receiver unit (204) are connected by way of at least some of the switches (206a, 206b, 206c, 206d), wherein the method comprises the following steps:
- assigning an identifier (220) (S106) to a data packet (218), which is to be transported from the transmit unit (202) to the receiver unit (204),
- defining a transmission path (212) (S104) of the data packet (218) with this identifier (220), wherein the transmission path (212) describes the transmission path (212) via which the data packet (218) is to be transported from the transmit unit (202) to the receiver unit (204) by way of at least some of the switches (206a, 206b, 206c, 206d), wherein the transmission path (212) specifies a sequence of switches (206a, 206b, 206c, 206d), by way of which the data packet (218) is to be transferred successively to the receiver unit (204), wherein from the sequence for each network entity, a network entity which is logically subordinate to this network entity and to which the data packet (218) is to be transferred is produced,
- configuring each of the switches (206a, 206b, 206c, 206d) of the transmission path (212), to which logically subordinate network entity this switch has to transfer (S108) the data packet (218) with the identifier (220), wherein the assignment of the identifier (220) to the data packet (218) and the definition of the transmission path (212) and the configuration of each of the switches (206a, 206b, 206c, 206d) is carried out by means of a central administration unit (210),
**characterised in that**
the transmission path (212) comprises a number of paths, by way of which the data packet (218) is to be transported in parallel from the transmit unit (202) to the receiver unit (204) by way of at least some of the switches, wherein the central administration unit (210) defines the various transmission paths (212) in advance such that the network resources available are loaded uniformly in the entire network system, wherein the central administration unit (210) provides a diagnosis even before sending the data packet to determine whether a possible transmission path currently makes available the network resources required to transmit the data packet, and wherein a data packet (218) is split up so that the individual parts of the data packet (218) are transferred via the various transmission paths (212) from the transmit unit (202) to the receiver unit (204).

2. Method according to claim 1, wherein the central administration unit (210) gives higher priority to short transmission paths than longer transmission paths.

3. Method according to one of claims 1 or 2, wherein alternative transmission paths (212) for transmitting the data packet to a specific receiver unit are redefined and activated in the case that predefined, possible transmission paths (212) do not currently make available the bandwidth required for the transmission of the data packet.

4. Method according to one of the preceding claims, wherein the method for multicast communications is provided in the automation technology between a transmit unit (202) and a number of receiver units (204).

5. Method according to one of the preceding claims, wherein the identifier (220) is free of a physical address of one of the network entities (206a, 206b, 206c, 206d, 204) and free of a label of one of the network entities (206a, 206b, 206c, 206d, 204) which is specific to an item of hardware.

6. Method according to one of the preceding claims, wherein the configuration of each of the switches (206a, 206b, 206c, 206d, 204) comprises a definition that the data packet (218) is transferred to the logically subordinate network entity exclusively on the basis of the identifier (220).

7. Method according to one of the preceding claims, wherein each of the switches (206a, 206b, 206c, 206d, 204) has output ports (312, 312a, 312b, 312c, 312d, 312e, 312f), wherein for one switch a specific output port with the network entity logically subordinate to this switch is connected by means of a specific network connection, wherein the network connection is part of the defined transmission path (212), wherein the configuration of each of the switches (206a, 206b, 206c, 206d, 204) for this switch comprises an assignment of the identifier (220) to the specific output port of this switch.

8. Method according to claim 7, further comprising:
- verifying for one of the switches (206a, 206b, 206c, 206d) whether its specific network connection (214a, 214b, 214c, 214d, 214e) currently makes available a bandwidth which is adequate to transmit the data packet (218) to the network entity logically subordinate to this switch (S102),
- in the case that the verification shows that the bandwidth currently available is not adequate to transfer the data packet (218), defining a new transmission path (212) of the data packet (218) (S102), wherein the new transmission path (212) describes the transmission path (212) via which the data packet (218) is to be transported from the transmit unit (202) to the receiver unit (204) by way of at least some of the switches and reconfiguring each of the switches of the transmission path (212), to which logically subordinate network entity this switch has to transfer the data packet (218) with the identifier (220).

9. Method according to one of the preceding claims, wherein the switches (206a, 206b, 206c, 206d) are verified by means of the central administration unit (210).

10. Method according to one of the preceding claims, wherein the identifier (220) of the data packet (218) is changed when the new transmission path (212) is defined.

11. Method according to one of the preceding claims, wherein the data packet (218) is a multicast data packet for multicast receivers, wherein the receiver unit (204) is one of the multicast receivers.

12. Computer program product with instructions, which can be executed by a processor, for implementing the method steps according to one of the preceding claims.

13. Device embodied as a central administration unit (210) for controlling a data transmission within a
network,
wherein the network has a transmit unit (202) and network entities (206a, 206b, 206c, 206d, 208a, 208b, 208c, 208d, 208e, 208f), wherein the network entities comprise a receiver unit (204) and a number of switches (206a, 206b, 206c, 206d), wherein the data transmission is used for a targeted transmission of a data packet (218) from the transmit unit (202) to the receiver unit (204), wherein the transmit unit (202) and the receiver unit (204) are connected via at least some of the switches (206a, 206b, 206c, 206d), wherein the device is embodied to carry out the following steps:
- assigning an identifier (220) to a data packet (218), which is to be transported from the transmit unit (202) to the receiver unit (204),
- defining a transmission path (212) of the data packet (218) with this identifier (220), wherein the transmission path (212) describes the transmission path (212) via which the data packet (218) is to be transported from the transmit unit (202) to the receiver unit (204) by way of at least some of the switches, wherein the transmission path (212) specifies a sequence of switches, by way of which the data packet (218) is to be transferred successively to the receiver unit (204), wherein from the sequence for each network entity, a network entity which is logically subordinate to this network entity and to which the data packet (218) is to be transferred is produced,
- configuring each of the switches of the transmission path (212), to which logically subordinate network entity this switch has to transfer the data packet (218) with the identifier (220),
- assigning the identifier (220) to the data packet (218) and defining the transmission path (212) and configuring each of the switches (206a, 206b, 206c, 206d), **characterised in that** the transmission path (212) comprises a number of paths, by way of which the data packet (218) is to be transported in parallel from the transmit unit (202) to the receiver unit (204) by way of at least some of the switches, wherein the central administration unit (210) is also embodied to define the various transmission paths (212) in advance such that the network resources available are loaded uniformly in the entire network system, wherein the central administration unit (210) is further embodied to provide a diagnosis even before sending the data packet to determine whether a possible transmission path currently makes available the network resources required to transmit the data packet, and to split up a data packet (218) so that the individual parts of the data packet (218) are transferred via the various transmission paths (212) from the transmit unit (202) to the receiver unit (204).

14. Device according to claim 13, wherein the device for controlling a data transmission in a network for multicast communications is provided in the automation technology between a transmit unit (202) and a number of receiver units (204) .

## Revendications

1. Procédé de transmission de données mis en oeuvre par ordinateur, pour unité (210) centrale de gestion dans un réseau, le réseau ayant une unité (202) d'émission et des entités (206a, 206b, 206c, 206d, 208a, 208b, 208c, 208d, 208e, 208f) de réseau, les entités de réseau comprenant une unité (204) de réception et plusieurs switchs (206a, 206b, 206c, 206d), le procédé servant à une transmission ciblée d'un paquet (218) de données de l'unité (202) d'émission à l'unité (204) de réception, l'unité (202) d'émission et l'unité (204) de réception étant reliées par au moins certains des switchs (206a, 206b, 206c, 206d), le procédé comprenant les stades suivants :
- affectation d'une caractérisation (220) (S106) à un paquet (218) de données, qui doit être transporté de l'unité (202) d'émission à l'unité (204) de réception,
- fixation d'un chemin (212) (S104) de transmission du paquet (218) de données par sa caractérisation (220), le chemin (212) de transmission décrivant le chemin (212) de transmission, suivant lequel le paquet (218) de données doit être transporté de l'unité (202) d'émission à l'unité (204) de réception en passant par au moins certains des switchs (206a, 206b, 206c, 206d), le chemin (212) de transmission indiquant une succession des switchs (206a, 206b, 206c, 206d), par lesquels, successivement, le paquet (218) de données doit être transmis à l'unité (204) de réception, dans lequel il est donné, à partir de la succession, pour chaque entité du réseau, une entité du réseau, qui est subordonnée logiquement à cette entité du réseau et à laquelle le paquet (218) de données doit être transmis,
- configuration de chacun des switchs (206a, 206b, 206c, 206d) du chemin (212) de transmission, à l'entité du réseau, subordonnée logiquement, à laquelle ce switch a (S218) à transmettre le paquet (218) de données avec la caractérisation (220),
dans lequel l'affectation de la caractérisation (220) au paquet (218) de données et la fixation du chemin (212) de transmission et la configuration de chacun des switchs (206a, 206b, 206c, 206d) s'effectuent par une unité (210) centrale de gestion,
**caractérisé**
**en ce que** le chemin (212) de transmission, comprend plusieurs chemins, par lesquels, en parallèle, le paquet (218) de données doit être transporté de l'unité (202) d'émission à l'unité (204) de réception en passant par au moins certains des switchs, l'unité (210) centrale de gestion fixant à l'avance les divers chemins (212) de transmission, de manière à bien utiliser uniformément les ressources du réseau à disposition dans tout le système du réseau, l'unité (210) centrale de gestion posant, dès avant l'envoi du paquet (218) de données, un diagnostic sur le point de savoir si un chemin de transmission possible met présentement à disposition les ressources du réseau nécessaires à la transmission du paquet de données, et dans lequel on sépare un paquet (218) de données, de manière à ce que les diverses parties du paquet (218) de données soient transmises de l'unité (202) d'émission à l'unité (204) de réception, par les divers chemins (212) de transmission.

2. Procédé suivant la revendication 1, dans lequel l'unité (210) centrale de gestion donne, à des chemins de transmission courts, une priorité plus grande qu'à des chemins de transmission plus longs.

3. Procédé suivant l'une des revendications 1 ou 2, dans lequel, dans le cas où des chemins (212) de transmission possibles définis à l'avance ne mettent pas présentement à disposition la largeur de bande nécessaire à la transmission du paquet de données, on redéfinit et on active des chemins (212) de transmission alternatifs pour transmettre le paquet de données à une unité de réception déterminée.

4. Procédé suivant l'une des revendications précédentes, dans lequel le procédé est prévu, dans la technique d'automatisation, pour des communications multicast, entre une unité (202) d'émission et plusieurs unités (204) de réception.

5. Procédé suivant l'une des revendications précédentes, dans lequel la caractérisation (220) est exempte d'une adresse physique de l'une des entités (206a, 206b, 206c, 206d, 204) du réseau et exempte d'une désignation spécifique de matériel de l'une des entités (206a, 206b, 206c, 206d, 204) du réseau.

6. Procédé suivant l'une des revendications précédentes, dans lequel la configuration de chacun des switchs (206a, 206b, 206c, 206d, 204) comprend la constatation, que le paquet (218) de données doit être transmis à l'entité de réseau, subordonnée logiquement, exclusivement sur la base de la caractérisation (220).

7. Procédé suivant l'une des revendications précédentes, dans lequel chacun des switchs (206a, 206b, 206c, 206d, 204) a un accès (312, 312a, 312b, 312c, 312d, 312e, 312f) de sortie, dans lequel, pour un switch, un accès de sortie déterminé est relié, au moyen d'une liaison de réseau déterminée, à l'entité du réseau, subordonnée logiquement à ce switch, la liaison du réseau faisant partie du chemin (212) de transmission fixée, la configuration de chacun des switchs (206a, 206b, 206c, 206d, 204) comprenant, pour ce switch, une affectation de la caractérisation de l'accès de sortie déterminé de ce switch.

8. Procédé suivant la revendication 7, comprenant en outre :
- le contrôle pour l'un des switchs (206a, 206b, 206c, 206d) si sa liaison (214a, 214b, 214c, 214d, 214e) de réseau déterminée met présentement à disposition une largeur de bande suffisante pour la transmission du paquet (218) de données à l'entité du réseau subordonnée logiquement à ce switch,
- dans le cas, où le contrôle donne que la largeur de bande à disposition présentement est insuffisante pour la transmission du paquet (218) de données, la fixation d'un nouveau chemin (212) de transmission du paquet (218) de données (S102), le nouveau chemin (212) de transmission décrivant le chemin (212) de transmission, suivant lequel le paquet (218) de données doit être transporté de l'unité (202) d'émission à l'unité (204) de réception en passant par au moins certains des switchs et la reconfiguration de chacun des switchs du chemin (212) de transmission, indiquant l'entité du réseau, subordonnée logiquement, à laquelle ce switche a à transmettre le paquet (218) de données avec la caractérisation (220).

9. Procédé suivant l'une des revendications précédentes, dans lequel on effectue le contrôle des switchs (206a, 206b, 206c, 206d) par l'unité (210) centrale de gestion.

10. Procédé suivant l'une des revendications précédentes, dans lequel, à la fixation du nouveau chemin (212) de transmission, on modifie la caractérisation (220) du paquet (218) de données.

11. Procédé suivant l'une des revendications précédentes, dans lequel le paquet (218) de données est un paquet de données multicast pour des récepteurs multicast, l'unité (204) de réception étant l'un des récepteurs multicast.

12. Produit de programmes d'ordinateur, ayant des instructions pouvant être exécutées par un processeur, pour effectuer les stades de procédé suivant l'une des revendications précédentes.

13. Installation, constituée en unité (210) centrale de gestion de commande d'une transmission de données au sein d'un réseau,
dans laquelle le réseau a une unité (202) d'émission et des entités (206a, 206b, 206c, 206d, 208a, 208b, 208c, 208d, 208e, 208f) de réseau, les entités de réseau comprenant une unité (204) de réception et plusieurs switchs (206a, 206b, 206c, 206d), le procédé servant à une transmission ciblée d'un paquet (218) de données de l'unité (202) d'émission à l'unité (204) de réception, l'unité (202) d'émission et l'unité (204) de réception étant reliées par au moins certains des switchs (206a, 206b, 206c, 206d), l'installation étant constituée pour effectuer les stades suivants :
- affectation d'une caractérisation (220) à un paquet (218) de données, qui doit être transporté de l'unité (202) d'émission à l'unité (204) de réception,
- fixation d'un chemin (212) de transmission du paquet (218) de données par sa caractérisation (220), le chemin (212) de transmission décrivant le chemin (212) de transmission, suivant lequel le paquet (218) de données doit être transporté de l'unité (202) d'émission à l'unité (204) de réception en passant par au moins certains des switchs (206a, 206b, 206c, 206d), le chemin (212) de transmission indiquant une succession des switchs (206a, 206b, 206c, 206d), par lesquels, successivement, le paquet (218) de données doit être transmis à l'unité (204) de réception, dans lequel il est donné, à partir de la succession, pour chaque entité du réseau, une entité du réseau, qui est subordonnée logiquement à cette entité du réseau et à laquelle le paquet (218) de données doit être transmis,
- configuration de chacun des switchs (206a, 206b, 206c, 206d) du chemin (212) de transmission, indiquant la entité du réseau, subordonnée logiquement, à laquelle ce switch a à transmettre le paquet (218) de données avec la caractérisation (220),
- affectation de la caractérisation (220) au paquet (218) de données et fixation du chemin (212) de transmission et de la configuration de chacun des switchs (206a, 206b, 206c, 206d), **caractérisée en ce que** le chemin (212) de transmission comprend plusieurs chemins, par lesquels, en parallèle, le paquet (218) de données doit être transporté de l'unité (202) d'émission à l'unité (204) de réception en passant par au moins certains des switchs, l'unité (210) centrale de gestion étant constituée, en outre, pour fixer les divers chemins (212) de transmission, à l'avance, de manière à ce que les ressources du réseau à disposition soient utilisées uniformément dans tout le système du réseau, l'unité (210) centrale de gestion étant constituée en outre pour poser, dès avant l'envoi du paquet de données, un diagnostic sur le point de savoir si un chemin de transmission possible met présentement à disposition les ressources du réseau nécessaires pour la transmission du paquet de données, et pour diviser un paquet (218) de données, de manière à ce que les diverses parties du paquet (218) de données soient transmises de l'unité (202) d'émission à l'unité (204) de réception par les divers chemins (202) de transmission.

14. Installation suivant la revendication 13, dans laquelle l'installation est prévue, dans la technique d'automatisation, pour commander une transmission de données dans un réseau de communications multicast entre une unité (202) d'émission et plusieurs unités (204) de réception.
